# EUROPEAN PATENT SPECIFICATION

(11) **EP 3 815 034 B1**
(45) Date of publication and mention of the grant of the patent: **11.12.2024**
(21) Application number: 19773283.7
(22) Date of filing: 06.09.2019
(51) Int. Cl.: G06T 1/00

(54) **DETECTING SEMI-TRANSPARENT IMAGE WATERMARKS**
DETEKTION VON HALBTRANSPARENTEN BILDWASSERZEICHEN
DÉTECTION DE FILIGRANES D'IMAGE SEMI-TRANSPARENTS

(43) Date of publication of application: 05.05.2021
(73) Proprietor: Google LLC, Mountain View, CA 94043 (US)
(72) Inventor: HE, Dake, Kitchener, Ontario N2G 1H6 (CA); PAN, Qichen, Mountain View, California 94043 (US); PAN, Kui, Burnaby, BC V5G 215 (CA)
(74) Representative: Marks & Clerk GST
(86) International application number: PCT/US2019/050011
(87) International publication number: WO 2021/045781

(56) References cited:
- US-A1- 2006 072 785
- US-A1- 2018 225 800
- US-A1- 2018 270 388

## Description

### BACKGROUND

In a networked environment such as the Internet, first-party content providers can provide information for presentation in electronic documents, for example web pages or application interfaces. The documents can include first-party content provided by first-party content providers and third-party content provided by third-party content providers.

Third-party content can be added to an electronic document using various techniques. Some documents include tags that instruct a client computer at which the document is presented to request third-party content items directly from third-party content providers. Other documents include tags that instruct the client computer to call an intermediary service that partners with multiple third-party content providers to return third-party content items selected from one or more of the third-party content providers. In some instances, third-party content items are dynamically selected for presentation in electronic documents, and the particular third-party content items selected for a given serving of a document may differ from third-party content items selected for other servings of the same document.

US 2018/225800 A1 discloses a method for identifying whether a standard picture contains a watermark. US 2006/072785 A1 discloses methods and systems for watermark encoding and decoding.

### SUMMARY

This specification describes computer-based systems, methods, devices, and other techniques for predicting whether an image likely is or is not encoded with a visually imperceptible watermark image. As explained in greater detail below, by first processing features of an image to predict whether it contains a watermark, substantial computational time and expense may be saved in a decoding process by avoiding attempts to decode images for which no watermark has been detected.

In some examples, a service system is called upon to identify metadata associated with a source image. The source image may be an image that was served by a third-party content provider and presented in a webpage or in a graphical interface of a native application at a user computing device (although source images may originate in various other contexts as well). The source image may be rendered in a context where a watermarking image is usually encoded in the source image through alpha-blending of the watermarking image over the source image. For example, a QR-code may be converted to a watermarking image by interspersing blank, non-encoded pixels so that each original (encoded) pixel in the QR-code directly neighbors all blank pixels. All of the black pixels in the QR-code can be made partially transparent with a very high transparency value in the watermarking image so that they are visually imperceptible to most users when overlaid on most source images, and all of the white and blank pixels can be made fully transparent. The QR-code may include or reference information about the origin of the source image, the time at which it was served, and/or other pertinent information or metadata. In some cases, screenshots of the source images may be captured and provided to the service system for decoding, e.g., to recover the QR-code and its encoded data.

However, because the service system may be called upon to process screenshots from a wide range of clients or users, some of the screenshots may depict source images that have not been encoded with a watermark image. Other screenshots may depict images that have been encoded with a watermark image, but for which the encoding has been corrupted (e.g., due to the presence of noise from image compression or due to intentional obfuscation/attacks) to such a degree that the prospect of successful decoding becomes impossible or prohibitively expensive. The nature of the encoding and corresponding decoding process itself, which involves estimation of a pixel's value in the watermarking image based on the shade or coloration of a corresponding pixel in the screenshot image relative to neighboring pixels, can be imprecise and render some encoded source images incapable of being decoded even in the absence of noise. To aid the service system in discerning whether the source image depicted in a given screenshot can be successfully decoded, the techniques described in this specification provide a predictive model for analyzing a unique set of features of the source image that allow for generation of a prediction indicative of whether the source image likely does or does not contain a watermarking image. The prediction can then be employed for a number of purposes, including determining whether to attempt decoding of the source image and/or determining whether an unsuccessful decoding was likely the result of the source image not containing a watermark that could be decoded in the first instance, or was likely the result of noise corrupting the watermark or another reason. The invention is set out in the appended set of claims.

The details of particular implementations of the subject matter described in this specification are set forth in the accompanying drawings and the description below. Other features, aspects, and advantages of the subject matter will be apparent from the description, the drawings, and the claims.

### DESCRIPTION OF DRAWINGS

Figure 1 is a block diagram of a computing environment for augmenting electronic documents served to client devices with watermark images arranged for display over one or more source images in the documents, and a server system configured to implement operations for watermark prediction and decoding.
Figures 2A-2J illustrate example techniques for generating a semitransparent watermark image and blindly encoding the watermark image over a source image.
Figure 3 is a flowchart of an example process for augmenting source images presented in documents served to a client computer with a watermark image, and subsequently decoding a screenshot containing a source image that has been encoded with the watermark.
Figure 4 is a flowchart of an example process for generating a watermark image from an encoding image.
Figure 5 is a depiction of an example encoding image in the form of a two-dimensional binary quick-response code (QR-code).
Figure 6 is a flowchart of an example process for predicting whether a captured source image (e.g., a screenshot) is encoded with one or more watermarking images.
Figure 7 is a flowchart of an example process for identifying regions in an image that have possibly been encoded with one or more watermarking images.
Figure 8 is a diagram of a watermark predictive model that processes values of various features associated with a possibly encoded source image to generate a watermark prediction.
Figure 9 provides a depiction of unsealed and scaled versions of a possibly encoded source image along with indications of possibly encoded regions identified in the possibly encoded source image.
Figure 10 depicts the schema of an example database table for storing a possibly encoded source image for a set of zoom levels.
Figure 11 is a flowchart of an example process for training a predictive model to generate predictions indicative of whether a possibly encoded source image likely is or is not encoded with a watermarking image.
Figure 12 is a block diagram of a computing system that can be used in connection with computer-implemented methods and other techniques described in this document.

Like reference numbers and indications in the various drawings indicate like elements.

### DETAILED DESCRIPTION

This specification describes techniques for detecting semi-transparent watermark images that have been blended over a source image so as to render the watermark visually imperceptible to a human user under normal viewing conditions. The detection process employs a predictive model that processes features of a candidate encoded source image to generate a prediction indicating whether the image likely does or does not contain watermarks.

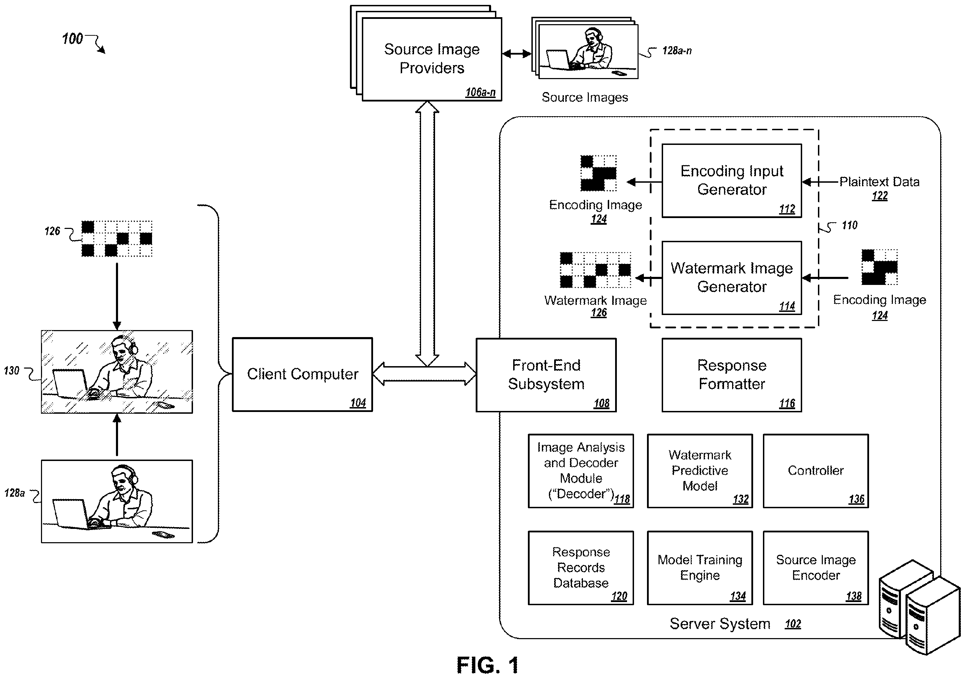

Referring to Figure 1, a diagram of a computing environment 100 is depicted in which source images are watermarked to digitally encode information associated with the source image, and in which encoded source images are decoded to recover the watermark or to access information referenced by the watermark. The environment 100 includes a server system 102, a client computer 104, and computing systems for one or more source image providers 106a-n. The server system 102, client computer 104, and source image providers 106a-n are communicably connected over one or more networks such as the Internet or a local area network (LAN). In general, the client computer 104 is configured to generate and transmit requests for electronic documents to the server system 102. Based on the requests from the client computer 104, the server system 102 generates responses (e.g., electronic documents) to return to the client computer 104. A given response can reference a selected source image 128a that is to be rendered at the client computer 104 for display to a user, where the source image 128a is provided by one of the source image providers 106a-n. In some implementations, the server system 102 can augment the response served to the client computer 104 with a distinct, semi-transparent watermarking image 126 that is arranged for display in a presentation of the response document at the client computer 104 over the source image 128. In other implementations, the server system 102 may be configured to employ a source image encoder 138 to watermark or encode the source image 128 with the watermarking image 126 at the server system 102 in a same or similar manner to the encoding that results from client computer 104 laying the watermarking image 126 over source image 128 (e.g., by alpha-blending the semi-transparent watermark image 126 in the foreground over source image 128), thereby merging the source image 128 and watermarking image 126 into a single encoded source image that is served to the client computer 104. The following discussion of Figure 1 focuses on the former implementations where a distinct watermark image 126 is served to the client computer 104 for rendering by the client computer 104 over top of the source image 128.

The client computer 104 can generally be any type of computing device that presents images and other content to one or more human users. The client computer 104 may include an application, such as a web browser application, that makes requests to and receives responses from the server system 102. The application may execute a response from the server system 102, such as web page code or other types of document files, to present the response to the one or more users of the client computer 104. In some implementations, the client computer 104 includes an electronic display device (e.g., an LCD or LED screen, a CRT monitor, a head-mounted virtual reality display, a head-mounted mixed-reality display), or is coupled to an electronic display device, that displays content from the rendered response to the one or more users of the client computer 104. The displayed content can include the selected source image 128a and the watermarking image 126 displayed over top of the selected source image 128a in a substantially transparent manner. In some implementations, the client computer 104 is a notebook computer, a smartphone, a tablet computer, a desktop computer, or a smartwatch or other wearable device.

In some implementations, the source image 128 provided in the response to the client computer 104 is a third-party content item that, for example, is not among content provided by a first-party content provider of the response. For example, if the response is a web page, the creator of the web page may include a slot that is configured to be populated by a source image from a third-party content provider that differs from the creator of the web page (e.g., a provider of an image repository). In another example, the first-party content provider may directly link to a third-party source image 128. The client computer 104 may request the source image 128 directly from a corresponding computing system for one of the source image providers 106a-n or indirectly via an intermediary service, such as a service provided by server system 102 or another server system.

The server system 102 is configured to respond to a request from the client computer 104 with an electronic document and a semi-transparent watermarking image 126 that is to be displayed in the electronic document over a source image 128a. The server system 102 and each of its components can be implemented as one or more computers, including data processing apparatus, in one or more locations. The server system 102 can include one or more of a front-end subsystem 108, an image generation subsystem 110, a response formatter 116, an image analysis and decoder module 118, a response records database 120, a watermark predictive model 132, a model training engine 134, a controller 136, and a source image encoder 138. Each subsystem can be implemented on hardware including data processing apparatus such as one or more processing devices. Each of the components 108-120, 132-138 is configured to perform the respective operations described herein. For example, the operations associated with each component 108-120 and 132-138 may be defined by instructions stored in memory on one or more computer-readable storage devices, and the operations may be carried out when the instructions are executed by one or more processors of the server system 102. Additionally or alternatively, the operations may be implemented using software, hardware, firmware, or a combination of software, hardware, and firmware. Although some operations are described herein as being performed by a specific one of the components 108-120 or 132-138 by way of example, in other implementations, some or all of the operations of two or more of the components 108-120 may be consolidated and performed instead by a single component. In yet other implementations, the operations of any one of the components 108-120 or 132-38 may be divided among two or more components.

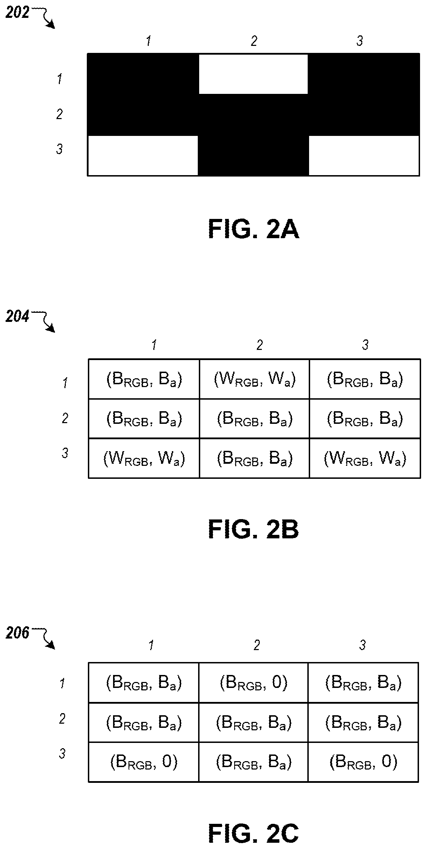

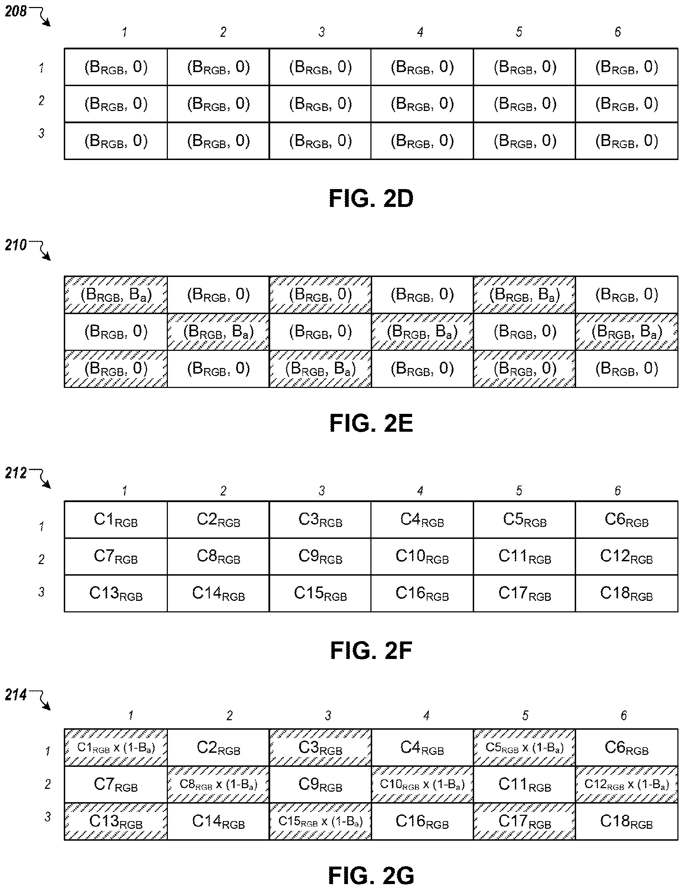

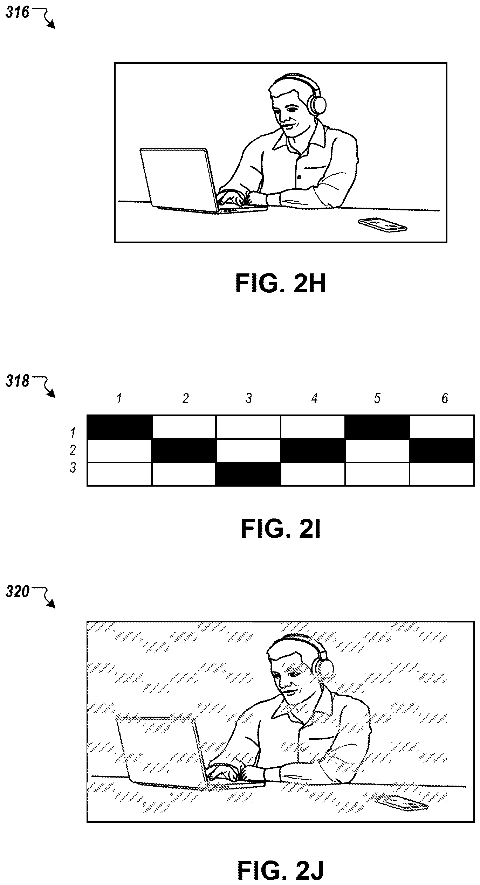

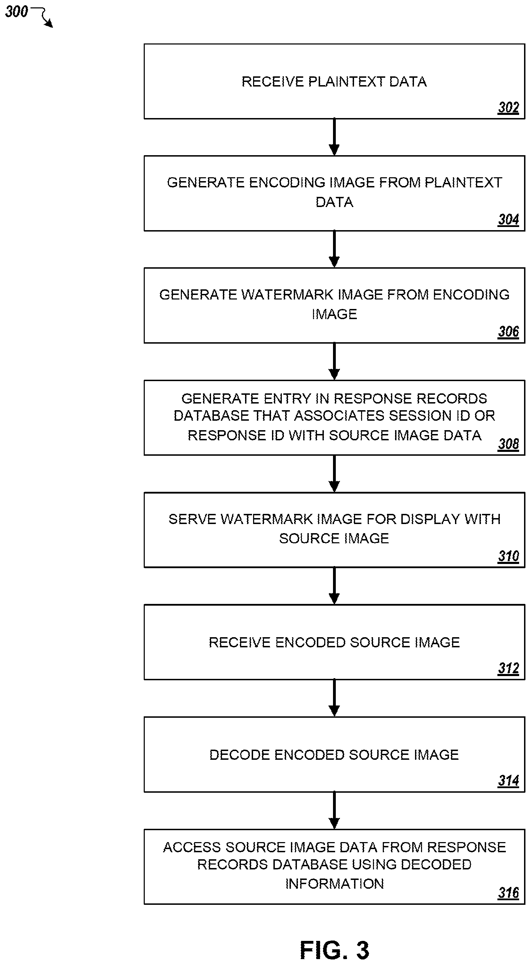

The server system 102 can be configured to carry out the techniques illustrated in Figures 2A-2I and the processes 300, 400, 600, 700, and 1100. The operations of processes 300, 400, 600, 700, and 1100, and other techniques, are described in further detail below with respect to Figures 3, 4, 6, 7, and 11. An overview of the server system 102 and its components 108-120,132-138 follows below, with further detail of the operations and other techniques performed by these components described subsequently with respect to Figures 2-11.

The front-end subsystem 108 provides an interface for communicating over one or more networks. The front-end subsystem 108 receives requests from the client computer 104 and transmits responses to the requests, along with any content associated with the requests such as a watermarking image and, optionally, a source image, to the client computer 104. The front-end subsystem 108 may also communicate with the computing systems of source image providers 106a-n, e.g., to obtain a source image 128a to serve to the client computer 104. The front-end subsystem 108 may also communicate with, and include a controller 136 for coordinating activities among, each of the components 112-120, 132-138 of the server system 102. To facilitate communication with devices over a network, the front-end subsystem 108 can include a wired (e.g., metallic or optical), wireless, or combination of wired and wireless communications interfaces that enable the front-end subsystem to connect to a suitable communications network.

The image generation subsystem 110 is configured to generate images from input data. In particular, the image generation subsystem 110 includes an encoding input generator 112 and a watermarking image generator 114.

The encoding input generator 112 processes a plaintext data item 122 to generate an encoding image 124 that encodes the plaintext data item 122. The plaintext data item 122 can be any data that is capable of being encoded within the constraints of the encoding input generator 112. For example, the plaintext data item 122 may be a text sample or string with a maximum length of *n* characters, since the size of the encoding image 124 may be capable of providing lossless encoding for text samples only up to the pre-defined maximum length of *n* characters. In some implementations, the plaintext data item 122 includes a session identifier that uniquely identifies a network session between the client computer 104 and the server system 102 during which a response is served to a request from the client computer 104.

In some implementations, the plaintext data item 122 includes or references source image data that identifies the particular source image 128a served to the client computer 104 or information associated with the source image 128a (e.g., information that indicates which of the source image providers 106a-n provided the particular source image 128a served to the client computer 104 and a timestamp indicating when the source image 128a was served or requested). In some implementations, the response records database 120 stores data that correlates such information about a source image 128 or a response served for a particular request, in order to make the detailed information accessible via the session identifier or other information represented by the plaintext data item 122. The response records database 120 can also associate a session identifier with source image data, thereby making the source image data accessible by querying the database 120 using the session identifier represented by the plaintext data item 122. A user can then identify, for example, which of the source images 128a-n was served to the client computer 104 at what time and from which source image provider 106a-n for using the session identifier from the plaintext data item 122.

The encoding image 124 is an image that encodes the plaintext data item 122. In some implementations, the encoding image 124 is a matrix-type barcode that represents the plaintext data item 122. One example of a suitable matrix-type barcode is a Quick Response Code (QR code). The encoding image 124 can have a pre-defined size in terms of a number of rows and columns of pixels. Each pixel in the encoding image 124 can encode a binary bit of data, where the value of each bit is represented by a different color. For example, a pixel that encodes the binary value '1' may be black while a pixel that encodes the binary value '0' may be white. In some implementations, the smallest encoding unit of an encoding image 124 may actually be larger than a single pixel. But for purposes of the examples described herein, the smallest encoding unit is assumed to be a single pixel. It should be appreciated, however, that the techniques described herein may be extended to implementations where the smallest encoding unit is a set of multiple pixels, e.g., a 2x2 or 3x3 set of pixels.

The image generator subsystem 110 further includes a watermarking image generator 114. The watermarking image generator 114 is configured to process the encoding image 124 to generate a semi-transparent watermarking image 126. The semi-transparent watermarking image 126 is derived from the encoding image 124 and also encodes the plaintext data item 122. However, the transparencies, colors, arrangement of encoded pixels and/or other features of the watermarking image 126 may be changed from the transparencies, colors, arrangement of encoded pixels and/or other features of the encoding image 124. For example, whereas the encoding image 124 may be uniformly opaque and consist of encoded pixels that are closely packed adjacent to each other, the watermarking image 126 may include some fully transparent pixels and some partially transparent pixels. Moreover, the encoded pixels in the watermarking image 126 may be spaced relative to each other so that each encoded pixel is surrounded by non-encoded pixels (i.e., "blank" pixels). The transformation of the encoding image 124 to the watermarking image 126 may be performed so that, after the watermarking image 126 is overlaid and merged on a background source image 128a, the encoded information may be decoded, e.g., by reconstructing the encoding image 124 or the watermarking image 126.

In some implementations, the watermarking image 126 may be generated directly from the plain text data 122 without explicitly generating the encoding image 124 as an intermediate operation on the way to achieving watermark image 126. Moreover, for implementations where the server system 102 employs source image encoder 138 to directly merge the watermarking image 126 over top of the source image 128a for service of the merged image to the client computer 104, the server system 102 may directly encode the watermark in the source image 128 without explicitly generating the encoding image 124, watermarking image 126, or both. Nonetheless, for clarity in how such watermarking could be achieved, this specification discusses the detail of how encoding image 124 and watermarking image 126 can be explicitly generated. It will be apparent to persons of skill in the art how one or more of these operations could be consolidated to provide a more direct form of encoding/watermarking of source image 128a.

The response formatter 116 is configured to generate a response to return to the client computer 104 in reply to the client's request for an electronic document. The response can include one or more content items, including first-party content items and third-party content items, which collectively form an electronic document such as a web page, an application interface, a PDF, a presentation slide deck, or a spreadsheet. In some implementations, the response includes a primary document that specifies how various content items are to be arranged and displayed. The primary document, such as a hypertext markup language (HTML) page, may refer to first-party content items and third-party content items that are to be displayed in the presentation of the document. In some implementations, the response formatter 116 is configured to add computer code to the primary document that instructs the client computer 104, when executing the response, to display one or more instances of the watermarking image 126 over the source image 128a, e.g., to add a watermark to the source image 128a that is substantially imperceptible to human users. Because the watermarking image 126 has fully and partially-transparent pixels, the application at the client computer 104 that renders the electronic document can perform a blending technique to overlay the watermarking image 126 on the source image 128a according to the specified transparencies of the watermarking image 126. For example, the response formatter 116 may add code that directs the client computer 104 to display the source image 128a as a background image in a third-party content slot in an electronic document and to display one or more instances of the watermarking image 126 as a foreground image over the source image 128a.

The server system 102 further includes an image analysis and decoder module 118. The image analysis and decoder module 118 is configured to decode an encoded/watermarked source image, e.g., to reconstruct encoding image 124 or watermarking image 126, to recover the non-encoded version of source image 128a, and/or to recover plaintext data 122 so that information from the plaintext data 122 can be read and/or an appropriate record from response records database 120 can be accessed based on the information from plaintext data 122. The encoded/watermarked source image is an image that results from the client computer 104 rendering the watermarking image 126 over the source image 128a. Even though the watermarking image 126 may be separate from the source image 128a, the encoded source image 130 processed by the image analysis and decoder module 118 may be a merged image showing the watermarking image 126 blended over the source image 128a. For example, a user of the client computer 104 may receive an inappropriate or irrelevant source image 128a from one of the source image providers 106a-n in response to a request for an electronic document. The user may capture a screenshot of the encoded source image 130 and transmit the screenshot to the server system 102 for analysis, e.g., to inquire about the origin of the source image 128a. Because the screenshot shows the original source image 128a overlaid by the watermarking image 126. the image analysis and decoder module 118 can process the screenshot to recover an encoded representation of the plaintext data item 122, which in turn can be decoded to recover the plaintext data item 122 itself. The system 102 can then use the recovered plaintext data item 122 for various purposes, e.g., to query the response records database 120 to lookup detailed information about the source image 128a and its origins, or other information about the particular client session in which the source image 128a was served to the client computer 104. The encoded representation of the plaintext data item 122 that the image analysis and decoder module 118 generates can be, for example, a recovered watermarking image 126 or a recovered encoding image 124.

In some cases, the server system 102, including image analysis and decoder module 118, may receive requests to analyze possibly encoded/watermarked source images. As used herein, the term "possibly" refers to a condition of an item that might be attributable to the item but that is nonetheless unknown to a processing entity (e.g., server system 102 / decoder 118) that processes the item. That is, the possible condition of an item is a candidate condition of an item for which its truth is unknown to the processing entity. The processing entity may perform processing to identify possible (candidate) conditions of an item, to make a prediction as to the truth of a possible (candidate) condition, and/or to identify possible (candidate) items that exhibit a particular condition. For example, a possibly encoded source image is a source image that is possibly encoded with a watermark but for which it is initially unknown to the server system 102 whether the image actually has been watermarked. The possible encoding of the source image with a watermark is thus a candidate condition of the source image, and the source image is a candidate item exhibiting the condition of being encoded with a watermark. The possibly encoded source image may result from a user capturing a screenshot of the source image and providing the image to server system 102 for analysis, but without more information that would indicate a confirmation as to whether the image had been encoded/watermarked. In these cases where the server system 102 receives a possibly encoded/watermarked source image, the decoder 118 may cooperate with the watermark predictive model 132 and the controller 136 to predict whether the possibly encoded source image likely does or does not contain a watermark before the decoder 118 completes one or more attempts to decode the possibly encoded source image. As explained in further detail with respect to other figures, the decoder 118 may identify possibly encoded regions of the possibly encoded source image, and may determine values for features of the possibly encoded source image. The values for these features may then be processed by the watermark predictive model 132 to generate a prediction indicative of whether the possibly encoded source image has been encoded with a watermarking image 126. The controller 136 may use this prediction to determine whether decoder 118 should attempt to complete a decoding process on the possibly encoded source image. The watermark predictive model 132 can be implemented on one or more computers in one or more locations where the server system 102 is implemented. In some examples, model 132 is a binary classifier. In some examples, model 132 is a neural network (e.g., a feedforward neural network having an input layer of operations, one or more hidden layers, and an output layer) or other machine-learning model. The model 132 may be trained on sample training data by model training engine 134.

Additional information about the computing environment 100 and techniques for encoding and decoding watermarks in images is described in U.S. Patent Application Serial No. 15/712,395, published as U.S. Pre-Grant Patent Application Publication No. 2018/0270388.

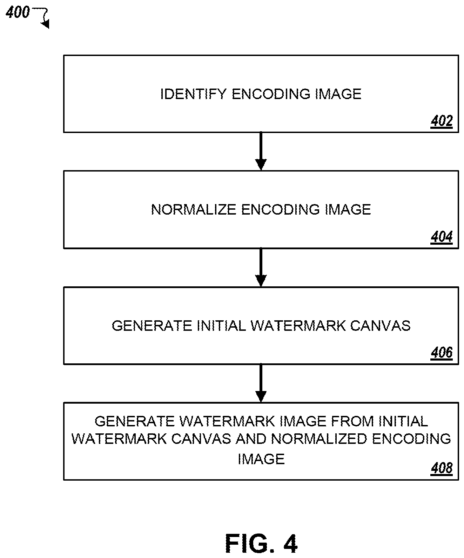

Figures 2A-2I illustrate example techniques for generating a watermarking image encoding plaintext data, and for decoding an encoded source image to recover an encoded representation of the plaintext data (e.g., to reconstruct one or more of the encoding image, watermarking image, or plaintext data from the encoded source image). Each of Figures 2A-2I is discussed in further detail below with respect to the processes represented in the flowcharts of Figures 3 and 4. Specifically, Figure 3 is a flowchart of an example process 300 for using a semi-transparent watermarking image to augment a source image presented in an electronic document served to a client computer. The process 300 can be carried out by a system of one or more computers, e.g., server system 102.

In some implementations, the process 300 begins at stage 302, where the system receives plaintext data, e.g., plaintext data item 122. Plaintext data is generally any data that is capable of being encoded in an encoding image such as a QR code. In some implementations, the plaintext data is a session identifier that uniquely identifies a logical session between a client computer and the system, or that identifies an electronic document served in response to a request from a client computer. In some implementations, the plaintext data includes or references source image data that identifies a particular source image served to the client computer or information associated with the source image.

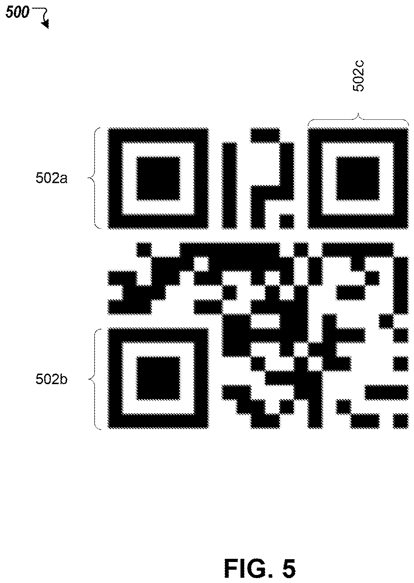

At stage 304, an encoding input generator, e.g., encoding input generator 112, of the system generates an encoding image from the plaintext data. The encoding image is an image that encodes the plaintext data. In some implementations, the encoding image is a matrix-type barcode that represents the plaintext data. One example of a suitable matrix-type barcode is a Quick Response Code (QR-code) such as the QR-code 500 depicted in Figure 5. The encoding image can have a pre-defined size in terms of a number of rows and columns of pixels. Each pixel in the encoding image can encode a binary bit of data, where the value of each bit is represented by a different color. For instance, a pixel that encodes the binary value '1' may be black while a pixel that encodes the binary value '0' may be white.

One example of a simple encoding image 202 is shown in Figure 2A. The encoding image 202 in this example is a two-dimensional barcode that has three rows and three columns of pixels. Of course, other sizes of encoding images are also possible with more or fewer rows and columns of pixels. In the encoding image 202, some pixels have a first binary color, i.e., black, and other pixels have a second binary color, i.e., white. The color of each pixel is defined by a color value. The pixels located at (row, column) coordinates (1, 2), (3, 1), and (3, 2), for example, are white, while the other pixels in encoding image 202 are black.

Additionally, each pixel may have a transparency value (also referred to as an "alpha" value) that indicates a transparency level of the pixel. The transparency value may be normalized to the range [0, 1] where a value of '0' represents fully transparent, a value of '1' represents fully non-transparent (opaque), and intermediate values between '0' and '1' represent partial transparencies. In some implementations, the encoding image 202 is fully non-transparent such that each of the pixels of the encoding image 202 has a transparency value of '1'. Image rendering applications can then use transparency values to determine composite colors for pixels that result when a foreground image is overlaid and blended on a background image. For example, in some blending procedures, if the color value of the background pixel is 'bgRGB' and the color value of the foreground pixel is 'fgRGB' with a transparency (alpha) value of 'fgA' normalized to the range [0, 1], then the composite pixel that is ultimately rendered for display to a user will have a color value of fgRGB * fgA + bgRGB * (1 - fgA). If the value of 'fgA' is zero, that the formula condenses to bgRGB • (1 - fgA). Figure 2F, for example, shows an example background image 212 (e.g., a source image), where each pixel has a color value identified by the symbol C*n*_{RGB}.

Figure 2G shows an encoded source image 214 that has been generated using the blending technique described in the preceding paragraph to overlay watermarking image 210 (foreground image) on source image 212 (background image), where the colors of certain encoded pixels in the encoded source image 214 are a blend of partially transparent foreground pixels from the watermarking image 210 and the corresponding background pixel colors from the source image 212. It should be noted that the color values and expressions shown in Figure 2G assume that shaded pixels in the foreground watermarking image are black and thus the foreground RGB value for the pixel is (0, 0, 0). Accordingly, the full expression for the composite pixel that results from blending the foreground watermarking image and the background source image reduces from 'fgRGB * fgA + bgRGB * (1 - fgA)' to simply 'bgRGB * (1 - fgA).' Thus, if a foreground pixel from the watermarking image has color (0, 0, 0) and transparency value Ba, and the color of the background pixel is C*n*_{RGB}, then the composite color value for the pixel is defined by the expression C*n*_{RGB} * (1 - Ba). If the foreground pixel from the watermarking image has color (0. 0, 0) and transparency value 0, and the color of the background pixel is C*n*_{RGB}, then the composite color value for the pixel is C*n*_{RGB}.

At stage 306, a watermarking image generator, e.g., watermarking image generator 114, of the system generates a watermarking image. The watermarking image is a semi-transparent image that includes pixels having two or more different levels of transparency to encode the plaintext data item. For bi-Ievel transparency, the watermarking image may consist of a first set of pixels having a first transparency level, e.g., partially transparent, and a second set of pixels having a second transparency level, e.g., fully transparent. The first set of pixels may be encoded pixels that each represents a respective pixel from the encoding image having a first color value such as black. The second set of pixels may include two subsets of pixels, namely encoded pixels and blank pixels. Although the encoded and blank pixels in the second subset may share the same transparency level, only the encoded subset of pixels represents pixels from the encoding image having a second color value, such as white. The blank pixels do not represent any pixels from the encoding image, but are instead interspersed among the encoded pixels of the first and second sets of pixels to facilitate recovery of information from an encoded source image that may later result from the watermarking image being overlaid on a background image.

In some implementations, the system carries out stage 306 according to the example process 400 depicted in the flowchart of Figure 4. The process 400 is a process for generating a watermarking image from an encoding image. The process 400 can be performed by a system of one or more computers, e.g., server system 102, and specifically by a watermarking image generator, e.g., watermarking image generator 114.

At stage 402, the watermarking image generator identifies an encoding image such as encoding image 202.

Optionally, at stage 404, the watermarking image generator normalizes the encoding image. Normalizing the encoding image can involve mapping the respective color values and transparency values of all or some of the pixels in the encoding image to pre-defined color and/or transparency values. For example, if in the original encoding image, binary values encoded in the image were distinguished by pixel color, then in the normalized encoding image, binary values encoded in the normalized image may be distinguished by pixel transparency.

Figures 2B and 2C depict one example of normalizing an encoding image. In particular, Figure 2B shows an example representation 204 of the original encoding image 202 in which the black pixels all have the color value B_{RGB} and have the transparency value B_{A} and the white pixels all have the color value W_{RGB} and have the transparency value W_{A}. In some implementations, W_{A} and B_{A} are identical. Figure 2C shows a normalized encoding image 206 where the colors and transparencies of the pixels have been transformed so that the black and white pixels are assigned the common color B_{RGB} but are differentiated by their transparencies. The black pixels are assigned the transparency value B_{A}, while the white pixels are assigned the transparency value of '0', i.e., fully transparent.

Referring again to Figure 4, at stage 406, the watermarking image generator generates an initial watermark canvas. In some implementations, the initial watermark canvas is a preliminary image that has a pre-defined size and provides a starting point for creation of a watermarking image. An example initial watermark canvas is canvas 208, as shown in Figure 2D. The canvas 208 has the same number of rows as the normalized encoding image 206, but is made to have twice the number of columns as the normalized encoding image 206. Additionally, all the pixels in the initial watermark canvas 208 are blank pixels that have the same color and transparency level. Blank pixels are pixels that do not encode information from the encoding image and do not correspond to any pixels in the encoding image. In some implementations, blank pixels have the same transparency as the second set of pixels in the normalized encoding image 206. For example, the blank pixels in canvas 208 are fully transparent as indicated by the latter value in the respective parentheticals (color value, transparency value) for each pixel.

At stage 408, the watermarking image generator uses the normalized encoding image to add encoded pixels to the initial watermark canvas to create a final watermarking image. Encoded pixels are pixels in the watermarking image which, in contrast to blank pixels, do encode information from the encoding image. Each encoded pixel in the watermarking image corresponds to one of the pixels in the normalized encoding image. In some implementations, the final watermarking image is generated by replacing a subset of blank pixels in the initial watermark canvas with encoded pixels from the normalized encoding image. For example, a given blank pixel in the initial watermark canvas may be fully transparent. If that pixel is made to be an encoded pixel, then that pixel is assigned the transparency of a corresponding pixel from the normalized encoding image that is to be encoded. In some cases, the pixel may remain fully transparent if the corresponding pixel from the normalized encoding image is fully transparent. In other cases, the transparency of the watermark pixel may be adjusted to a partially transparent state if the corresponding pixel from the normalized encoding image is partially transparent

Figure 2E shows one example of a watermarking image 210 that the watermarking image generator generates from the initial watermark canvas 208 based on the normalized encoding image 206. Each of the pixels in the watermarking image 210 that have a patterned background represents an encoded pixel. Each of the pixels in the watermarking image 210 having a non-patterned white background represents a blank pixel. As the watermarking image 210 shows, the encoded pixels are distributed among the blank pixels such that each encoded pixel is neighbored at the top, bottom, left, and/or right by at least two blank pixels. In general, the watermarking image generator distributes encoded pixels in the watermarking image so that each encoded pixel is directly adjacent to at least one, two, three, four, or more blank pixels. This arrangement can allow encoded information to later be recovered from a source image that has been augmented by a watermarking image without *a priori* knowledge of the source image, as described further below. In the example of Figure 2E, the watermarking image generator has interspersed the encoded pixels in the watermarking image by Starting with the arrangement of pixels in the normalized encoding image, inserting a blank pixel directly to the right of each encoded pixel in odd-numbered rows, and inserting a blank pixel directly to the left of each encoded pixel in even-numbered rows so as to shift the encoded pixels in even-numbered rows by one pixel relative to the encoded pixels in odd-numbered rows. The effect is to stagger the encoded pixels and to surround them by blank pixels, as shown in the final watermarking image 210. Thus, in the final watermarking image 210, the only pixels that are not fully transparent are the encoded pixels that correspond to black pixels in the original encoding image 202. More generally, encoded pixels in the watermarking image 210 that correspond to pixels of a first binary color in the original encoding image 202 may be assigned a first transparency level, whereas a different, second transparency level may be assigned to both blank pixels and encoded pixels that correspond to pixels of a second binary color from the original encoding image 202.

In some implementations, the watermarking image generator can use other techniques for mapping encoded pixels from the normalized encoding image 206 to the final watermarking image 210. The watermarking image generator may use a mapping template that correlates positions for encoded pixels in the watermarking image 210 to pixel positions in the normalized encoding image 206. Every pixel in the normalized encoding image 206 can be mapped to a pixel in the watermarking image 210. In some implementations, the system can also use the mapping template to perform a reverse mapping of encoded pixels from an encoded source image in order to reconstruct the watermarking image 210 or the encoding image 202 from the encoded source image. The mapping template can identify any suitable arrangement of encoding pixels (e.g., in any order) in the watermarking image 210, so long as each of the encoding pixels neighbors blank pixels.

Referring back to Figure 3, at stage 308, the system generates an entry in a response records database, e.g., response records database 120. The response records database contains a log that stores information about each response or other electronic document (e.g., a pushed electronic document that is not responsive to a specific request) transmitted to one or more client computers in communication with the server system over a period of time. Each response may be associated with a client session, which may entail one or more request-response interactions between a given client computer and the server system. In some implementations, a given entry in the response records database includes a session ID, a response ID, and source image data. The session ID uniquely identifies a server-client network session, the response ID uniquely identifies a response served to the client computer during a given session, and the source image data identifies information about a source image transmitted to the client computer for a particular session or response. The session ID, response ID, or both may form the plaintext data that is encoded in the encoding image and watermarking image so that the system can later use a watermark overlaid on a source image to recover the session ID, response ID, or both, and to lookup the appropriate source image data associated with the session ID and/or response ID.

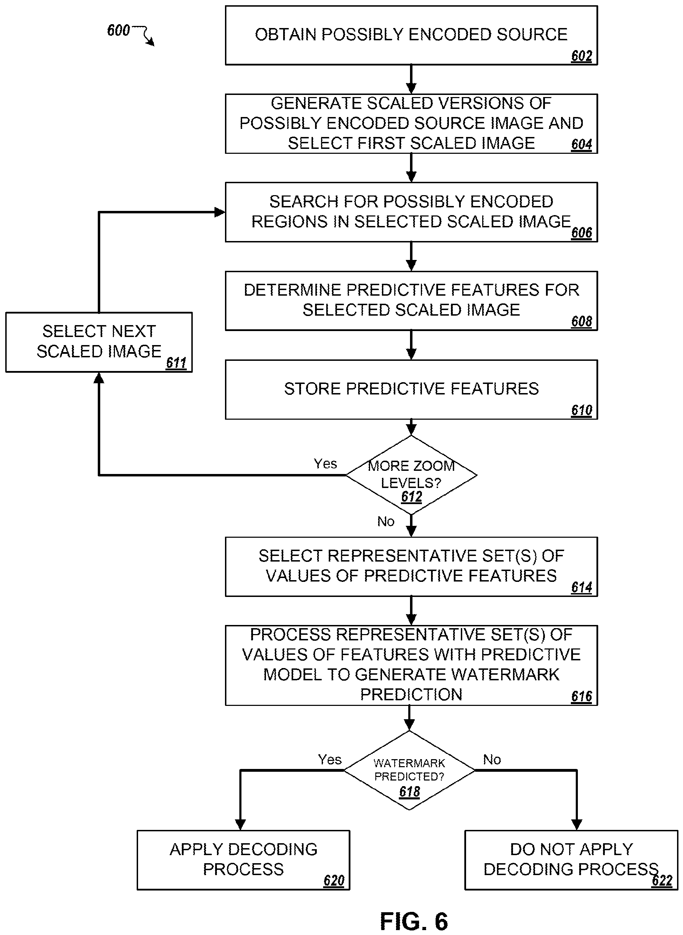

At stage 310, the server system serves an electronic document to the client computer. The electronic document may include computer code that, when executed by the client computer, causes the client computer to request and obtain the source image and the watermarking image. Further, the computer code may include instructions for the client computer to overlay the watermarking image on the source image when the electronic document is rendered for presentation to a user. For example, an example process 600 for rendering an encoded source image at a client computer is depicted in Figure 6. The process 600 can be carried out by one or more computing devices, e.g., client computer 104. In some implementations, the process 600 is carried out by an application installed on the client computer, such as a web browsing application. Alternatively, the server system 102 may blend the watermarking image and the source image to create the encoded source image at the server system 102 before it is served to the client computer 104.

At times, the server system 102 may be called upon to decode an encoded source image. For instance, at stage 312, the system receives an encoded source image, which may have been captured as a screenshot by a user of the client computer 104 and submitted to the server system 102 for decoding and analysis. At stage 314, the system decodes the encoded source image. The decoding process generally involves identifying the encoded values of the encoded pixels in the encoded source image, e.g., to determine whether each encoded pixel corresponds to a black pixel (value 1) in the encoding source image (e.g., a QR-code) or a white pixel (value 0) in the encoding source image. Once the position or coordinate of an encoded pixel has been ascertained, various decoding techniques can be employed to discern the encoded value of the pixel. For example, the color of the pixel may be compared to its neighboring pixels, and if the color of the pixel is darker than its neighboring pixels by a certain amount, then it may be considered to encode a black pixel (value 1) from the encoding image. If the color of the pixel is not darker than its neighboring pixels by the requisite amount, then it may be considered to encode a white pixel (value 0) from the encoding image. Moreover, the same encoded pixel from multiple instances of the watermarking image encoded in the source image may be analyzed and the results statistically averaged. In some implementations, a machine-learning model may be trained to perform a decoding analysis. Nonetheless, the decoding process can be computationally expensive and not always successful. For example, if the pattern of colors in the underlying source image obscures the darkening imposed by a partially transparent, black encoding pixel, then the encoded value may not be successfully recovered. Moreover, the system may need to iteratively search across the screenshot of the encoded source image to identify possible locations for the watermarking image, and may be required to do so for many possible zoom levels or resolutions since the system may not be privy to data indication at what zoom level or resolution the screenshot was rendered and captured. Accordingly, the descriptions of Figures 6-10 provide techniques for increasing efficiency of the decoding process using a predictive model to generate a prediction of whether a possibly encoded source image is even encoded with a watermarking image at all.

If decoding is successful, at stage 316 the server system uses the decoded information to recover plaintext data. The system may then use the plaintext data for various ends. In some implementations, the plaintext data represents a session ID or a response ID. The server system can query the response records database using the session ID or response ID to lookup source image data and determine, for example, a particular content provider that provided the source image.

Figure 5 depicts an example QR-code 500 that can serve as an encoding image, e.g., encoding image 124 for purposes of the techniques described in this specification. The QR-code 500 has a fixed size of 2 1x21 pixels in this example, although QR-codes of other pre-defined sizes would also be suitable. By way of example, the 21x21 QR-code 500 will be referenced in the discussion of Figures 6-10 to illustrate the techniques disclosed herein for predicting whether a possibly encoded source image likely has or has not been encoded with a watermarking image.

A distinctive feature of the QR-code 500 is its three 7x7 pixel squares 502a-502c located at the top-left, top-right, and bottom-left corners of code 500. The square patterns 502a-c aid optical-reading devices in locating the bounds of QR-code 500 and properly orienting an image of QR-code 500 so that rows and columns of pixels can be ascertained and the code 500 can be successfully read. Each square pattern is defined by seven consecutive black pixels (e.g., encoded value 1) in its first and seventh rows, the pattern black-white-white-white-white-white-black (e.g., encoded values 1-0-0-0-0-0-1) in the second and sixth rows, and the pattern black-white-black-black-black-white-black (e.g., encoded values 1-0-1-1-1-0-1) in the third, fourth, and fifth rows. A watermarking image can be formed from the QR-code 500 as described with respect to Figures 1-4, including by assigning a high-partial transparency value to each black pixel in the code 500, applying a full-transparency value to each white pixel in the code 500, inserting a blank (non-encoded) fully transparent pixel to the right of each pixel from the QR-code 500 in each odd-numbered row, and inserting a blank fully transparent pixel to the left of each pixel from the QR-code 500 in each even-numbered row of the code 500. The result is a 21x43 pixel watermarking image that can be overlaid on a source image that is to be encoded.

Figure 6 is a flowchart of an example process 600 for analyzing a possibly encoded source image to predict whether the image likely does or does not encode a watermarking image. In some implementations, the process 600 is performed by the image and analysis and decoder module 118 in cooperation with watermark predictive model 132 and controller 136 of the server system 102.

At stage 602, the system obtains a possibly encoded source image. In some implementations, the possibly encoded source image is acquired by a user capturing a screenshot of content displayed in a webpage or graphical interface of an application at the user's client computer device. The web page or application that is the target of the screenshot may include a source image that is susceptible to being encoded with a visually-imperceptible watermarking image, such as the source image 128a from third-party content provider 106 being encoded with a watermarking image 126 that was derived from QR-code 500. The user may manually (or the user's device may automatically) capture the screenshot and submit it for analysis by the server system for any number of reasons, such as for an analytics program, to report offensive or irrelevant content in the source image, to redeem promotional content encoded in the image, or to otherwise identify information about the source or context of the source image being served to the client computer 104. The source image may or may not be merged into a single image file when rendered at the client computer 104, but typically after the user has captured a screenshot of the source image, the effect is to create a merged image of any partially transparent watermarking image laid over top of the source image. In some cases, one or more factors related to the circumstances in which the screenshot was captured may increase the difficulty in the server's ask of decoding the image. For example, the user's device may have rendered a zoomed-in or zoomed-out view of the image at the time the screenshot was captured such that the image is displayed at a higher or lower resolution than the original source image and watermarking images, and the server system may receive no indication of the zoom level and corresponding resolution of the image. Additionally, the screenshot may over- or under-capture the possibly encoded source image. For example, if the possibly encoded source image is a banner ad in a webpage for which the user submits a screenshot of the entire webpage, then only a relatively small portion of the screenshot may actually be encoded with the watermarking image. In other cases, the screenshot may be cropped and contain less than all of the possibly encoded source image. Moreover, the screenshot may include noise as a result of file compression that reduces the storage and/or transmission expense of the screenshot.

At stage 604, the system generates one or more scaled versions of the possibly encoded source image. The system may be configured to perform decoding of a possibly encoded source image at its native, original resolution (e.g., a 100-percent zoom level such that the size of the possibly encoded source image matches the original size of the source image) to ensure predictability in the pattern of encoded and non-encoded pixels. However, because the zoom level of the possibly encoded source image obtained at stage 602 may be unknown to the decoding system, the system generates a set of scaled versions of the possibly encoded source image, where each scaled image provides a different version of the possibly encoded source image at an estimated resolution that corresponds to the 100-percent zoom level (also referred to as the "target" resolution or zoom level) by assuming a different starting zoom level for the possibly encoded image that was obtained at stage 602 and reducing or expanding the size of the image from the assumed starting zoom level to the target 100-percent zoom level. Thus, if a screenshot were assumed to have been captured at a 200-percent zoom level, the system would generate a first scaled version of the possibly encoded source image by reducing the dimensions of the image in half to achieve the target 100-percent zoom level. If the screenshot were assumed to have been captured at a 500-percent zoom level, the system would generate a second scaled version of the possibly encoded source image by reducing the dimensions of the image by one-fifth to achieve the target 100-percent zoom level. Any number of scaled versions of the possibly encoded source image may be generated. Because many user devices from which a screenshot of a possibly encoded source image may be captured provide the capability for a user to set zoomed-in display resolutions at any resolution from 100-percent to 500-percent zoom levels, in some implementations the system generates respective scaled versions of the possibly obtained source image corresponding to all 401 possible starting zoom levels from 100- to 500-percent However, in other implementations, a different range of zoom levels may be assumed as possible starting resolutions. Additionally, in some implementations, only a subset of possible zoom levels within a given range are sampled and used as a starting resolution from which a scaled version of the possibly encoded source image is generated.

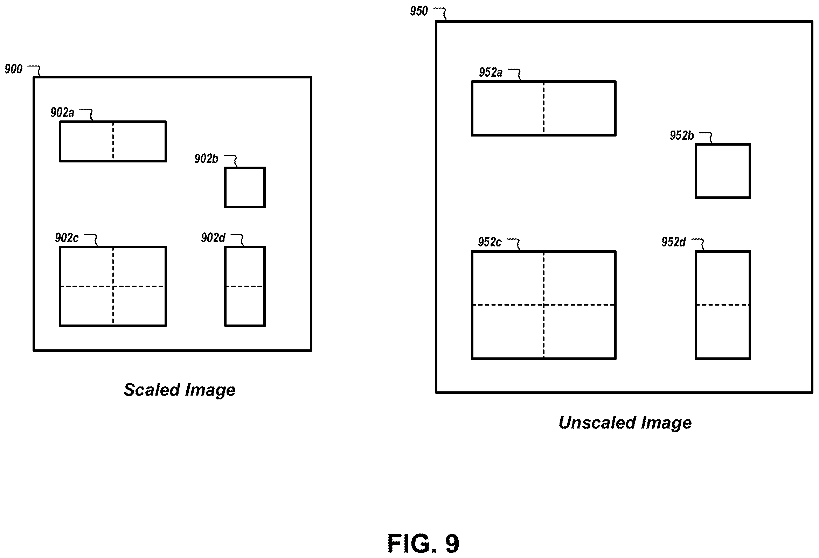

At stage 606, the system selects a first scaled version of the possibly encoded source image for a first estimated starting zoom level, and searches for possibly encoded regions in the scaled image. If the starting zoom level is estimated to the target zoom level (e.g., 100-percent), then the selected image may simply be the original image that was obtained at stage 602. A possibly encoded region of the selected/scaled image is a region that is determined to possibly be encoded with one or more instances of the watermarking image. In some implementations, watermarking images are much smaller than the source image itself and the watermarking images are therefore tiled directly adjacent to each other without overlap over all or a portion of the source image. In some implementations, for multiple instances of a possibly encoded watermarking image to be contained in a same possibly encoded region, the watermarking images must be continuous with each other (e.g., a series of directly adjacent/neighboring watermarks). If two instances of a possibly encoded watermarking image are detected in the scaled image that are non-contiguous with each other (either directly or indirectly via other instances of possibly encoded watermarking images), then they may be assigned to distinct possibly encoded regions. Figure 9 illustrates an example of a set of possibly encoded regions 902a-902d within a scaled version 900 of a possibly encoded source image 950. The dashed lines indicate divisions between blocks corresponding to different instances of a possibly encoded watermark image within a particular region.

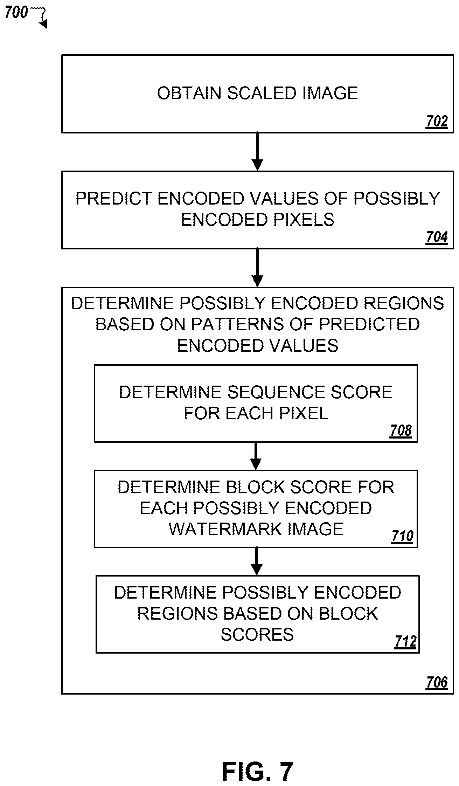

Additional detail of operations involved at stage 606 in some implementations for identifying possibly encoded regions in a scaled image is provided by the process 700 depicted in Figure 7. At stage 702, the system (e.g., image analysis and decoder module 118) obtained the scaled version of the possibly encoded source image that is to be searched for possibly encoded regions. At stage 704, the system predicts encoded values of the possibly encoded pixels in the scaled image. For cases where the watermarking image provides encoded pixels at every other pixel position in a staggered fashion so that each encoded pixel is neighbored above, below, to the left, and to the right by a blank (non-encoded) pixel, the system may predict the encoded values of every other pixel in the scaled image, i.e., pixels that would correspond to an encoded pixel in any watermarking image(s) that scaled image encoded. The encoded value of each encoded pixel may be predicted by analyzing the color of that pixel relative to the colors of its neighboring blank pixels. For example, if the color of a possibly encoded pixel is sufficiently darker (e.g., by a least a pre-defined threshold amount) than one or more of its neighboring pixels or an average of its neighboring pixels, then the pixel may be predicted to encode a black pixel from the watermarking image (e.g., a value of '1'). If the color of the possibly encoded pixel is not sufficiently darker than one or more of its neighboring pixels or an average of its neighboring pixels, then the pixel may be predicted to encode a white pixel from the watermarking image (e.g., a value of '0'). In some implementations, rather than applying a binary classification to each possibly encoded pixel to predict whether the pixel encodes either a black pixel from the watermarking or encoding image or a white pixel from the watermarking or encoding image, the system may generate a score (e.g., a probability value) for each pixel that indicates a likelihood that the pixel encodes a particular binary value (e.g., a probability that the pixel encodes a black pixel or a white pixel).

At stage 706, the system determines possibly encoded regions of the scaled image based on patterns of the predicted encoded values of the possibly encoded pixels in the scaled image. In some implementations, the system identifies a possibly encoded region by evaluating the predicted encoded values of the possibly encoded pixels in the scaled image to identify distinctive patterns indicative of a watermarking or encoding image. When the predicted encoded values match the pre-defined pattern for a watermarking or encoding image, an instance of a watermarking or encoding image is registered as a block for a possible encoded region. For example, the system may search for patterns of predicted encoded values that correspond to the distinctive square patterns 502a-502c of the QR-code 500, or may search for a portion of the square patterns 502a-502c such as the pattern black-white-black-black-black-white-black (e.g., values 1-0-1-1-1-0-1) from the middle three rows of each square pattern. If these pre-defined patterns are recognized in the predicted encoded values, then the system registers an instance of a possibly encoded watermarking or encoding image in the scaled image at the location where the patterns were recognized. In some implementations, the system may require perfect correspondence between the predicted encoded values and pre-defined patterns to register a match. In other implementations, the system may permit some degree of tolerance so that imperfect correspondence between the predicted encoded values and the pre-defined patterns can nonetheless result in a registered match (e.g., so long as at least a threshold portion of the predicted encoded values match the corresponding encoded values provided in the pre-defined patterns). Contiguous sets of one or more identified blocks of possibly encoded watermarking/encoding images in the scaled image are then assigned to respective possibly encoded regions.

In some implementations, the process of searching for and identifying possibly encoded regions can be enhanced through performance of the operations of stages 708-712 of Figure 7. At stage 708, the system determines a sequence score for each (or a subset) of the possibly encoded pixels in the scaled image. The sequence score for a given possibly encoded pixel indicates a likelihood that the encoded values for a sequence of possibly encoded pixels that includes or has a defined relationship to the given possibly encoded pixel matches a predetermined distinctive pattern of encoded values that is indicative of the presence of a watermarking or encoding image. In some implementations, the sequence score for a given possibly encoded pixel indicates a likelihood that the encoded values for the next seven possibly encoded pixels in the same row of the scaled image as the given possibly encoded pixel matches the black-white-black-black-black-white-black (e.g., 1-0-1-1-1-0-1) sequence that is found in the middle three rows of the square patterns 502a-502c of QR-code 500. In some cases, the sequence score is determined based on a number of matches of the predicted encoded values to the predetermined sequence of encoded values. In some cases, the sequence score is determined based on consideration of the individual probability values for each possibly encoded pixel in the sequence relative to the target values in the predetermined sequence.

At stage 710, the system identifies every possible position of a block, i.e., a possibly encoded instance of a watermarking or encoding image, in the scaled image, and for each block position, a block score indicating a likelihood that a watermarking or encoding image is encoded at that block position. In some examples, the number of block positions is approximately equal to the number of pixels in the scaled image since a different block position can be identified by sliding the block pixel-by-pixel (except perhaps around the periphery of the image where a full block may not be possible as it would extend beyond the edges of the image). The block score for a block position can be computed based on the sequence scores for certain positions of possibly encoded pixels in the block. For example, to determine a block score for a block at a given position of the scaled image that indicates a likelihood that a watermarking image corresponding to the QR-code 500 has been encoded in the block at that position, the system may evaluate the sequence scores for pixels near the top-left, top-right, and bottom-left portions of the block that indicate a likelihood that the seven pixel sequence from the square patterns 502a-502c occur at the appropriate positions of the block that would correspond to an encoded QR-code watermarking image. The block score may indicate a higher likelihood that a watermarking image is encoded in the block, for example, if the sequence scores at those three corners of the block each indicate a high likelihood that the pixels at those corners have been encoded with the black-white-black-black-black-white-black (e.g., 1-0-1-1-1-0-1) sequence.

At stage 712, the system determines possibly encoded regions of the scaled image based on the block scores. For example, for each block position in the scaled image, the system may assess the likelihood that one or more contiguous blocks starting from that block position are encoded with respective instances of a watermarking or encoding image. From the block scores and analysis of the likelihoods of various permutations of contiguous blocks each being encoded with a watermark, the system resolves a set of mutually exclusive possibly encoded regions for which the system has sufficient confidence that the regions are likely encoded with one or more contiguous blocks of watermarking or encoding images.

Referring again to Figure 6, after having determined one or more possibly encoded regions of the scaled image, at stage 608, the system determines values for a set of predictive features for the scaled image. These values will be subsequently processed to generate an ultimate or final prediction as to whether the possibly encoded source image has been encoded with a visually-imperceptible, partially transparent watermarking image (or set of repeated watermarking images tiled across the source image) according to the techniques described previously with respect to Figures 2-4. In some implementations, the predictive features characterize information about the possibly encoded regions identified in the scaled image. The features include one of (i) a mean (or other average) number of blocks in the identified possibly encoded regions of the scaled image, (ii) the number of blocks in the largest identified possibly encoded region of the scaled image (i.e., a maximum number of blocks among the possibly encoded regions), (iii) a standard deviation or other measure of spread in the number of blocks contained in the identified possibly encoded regions of the scaled image, (iv) a total number of identified possibly encoded regions in the scaled image, or a combination of two or more of these.

In some implementations, values for additional features are computed based on analysis of pixels in the unsealed version of the possibly encoded source image. For example, the system may map the identified possibly encoded regions from the scaled version of the possibly encoded source image to corresponding regions in the unsealed version of the possibly encoded source image. One such mapping is illustrated by way of example in Figure 9, where each of the possibly encoded regions 902a-902d from the scaled version 900 of the possibly encoded source image is mapped to a corresponding region 952a-952d in the unsealed version 950 of the possibly encoded source image. For each mapped region 952a-952d in the unsealed version of the possibly encoded source image, the system computes three values: (i) variance in the red channel values for the pixels in the mapped region, (ii) variance in the blue channel values for the pixels in the mapped region, and (iii) variance in the green channel values for the pixels in the mapped region. The system then selects the lowest (minimum) blue channel variance among the mapped regions 952a-952d, the lowest green channel variance among the mapped regions 952a-952d, and the lowest blue channel variance among the mapped regions 952a-952d. These three selected lowest variance values can then be applied among the predictive features as an input to the watermark predictive model, along with the features characterizing the possibly encoded regions of the scaled version of the possibly encoded source image, as described in the preceding paragraph. For example, let S denote the source image, X denote the watermarking image, and Y = X+S as encoded (watermarked) source image. Since X is generated without knowledge of S, it may reasonably be assumed that X and S are independent of each other. It follows that Var[Y] = Var[X] + Var[S]. On the decoder side, a noisy version of Y, denoted by Z, is received. Without losing generality, assume that the noise, denoted by N, is additive and independent of Y. That is Z = Y + N. Thus, Var[Z] = Var[Y] + Var[N] = Var[X] + Var[S] + Var[N]. Var[S] and Var[N] are nonnegative, and Var[X] > 0. As such, when Var[Z] is small, it is largely due to Var[X]. In other words, when Var[Z] is small, it can be appreciated that Var[X] can be approximated by using Var[Z] in the case where watermarks are present. Furthermore, when Var[X] is small, greater confidence can be achieved in the classification result (e.g., whether watermarks are encoded in the source image). On the other hand, when Var[X] is large, less confidence may be seen in the classification result.

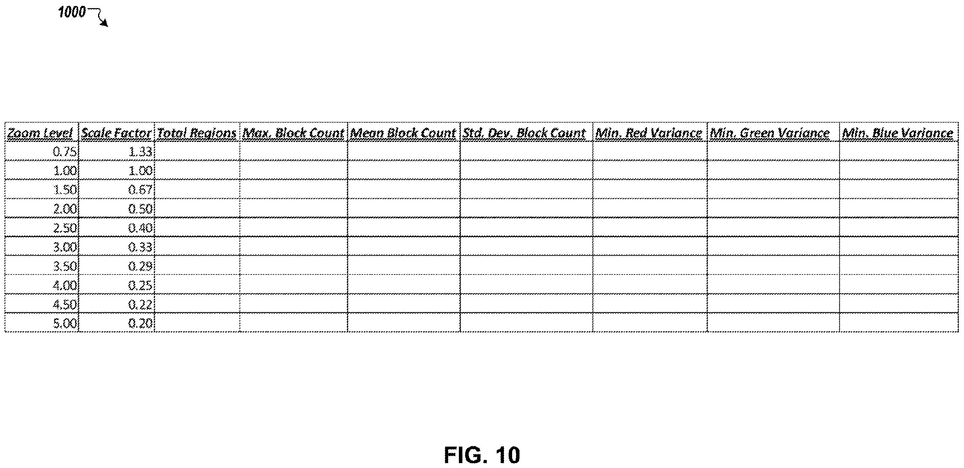

At stage 610, the system stores the values of the predictive features that were determined at stage 608. In some implementations, the system maintains a database of values of predictive features determined for each scaled version of the possibly encoded source image that the system analyzes. Each time new values for a set of features is determined for another scaled version of the image, a new record or entry may be created in the database and the values stored therein. An example database table 1000 for storing predictive feature values associates with a given possibly encoded source image is depicted in Figure 10. As shown, each row in the table 1000 represents a record that stores values of features for a different scaled version of the possibly encoded source image. The system may temporarily store values in the database for the features computed for each scaled version of the image until feature values have been computed for all zoom levels of interest

At stage 612, the system determines whether feature values are to be computed for any additional scaled images corresponding to different estimates of the starting zoom level for the possibly encoded source image. If additional scaled images are to be analyzed, the system proceeds to stage 611, selects a next scaled version of the possibly encoded source image, and returns to stage 606. If no additional scaled images remain to be analyzed, the system proceeds to stage 614.

At stage 614, the system accesses the database of feature values computed for each of the scaled images and selects one of the sets of feature values for a particular scaled image as a representative set. Various rules can be applied in determining which set of feature values to select as the representative set. In some implementations, the system selects the set of feature values for the scaled version of the possibly encoded source image that yielded the largest possibly encoded region in terms of the number of blocks in the region. For example, if the scaled version of the image that was shrunk to the target zoom ratio from an assumed starting zoom ratio of 200-percent produced a maximum region block count greater than the maximum region block counts associated with the scaled images for any other zoom ratios, then the set of feature values corresponding to this scaled version of the image may be selected as the representative set. Additional or other features may also be used as a basis for selecting the representative set. In some implementations, multiple sets of feature values for several zoom ratios may be selected as representative sets such as the top *n* number of sets (e.g., *n* = 2, 3, 4, or 5). In some implementations, all of the sets of feature values may be selected as representative sets.

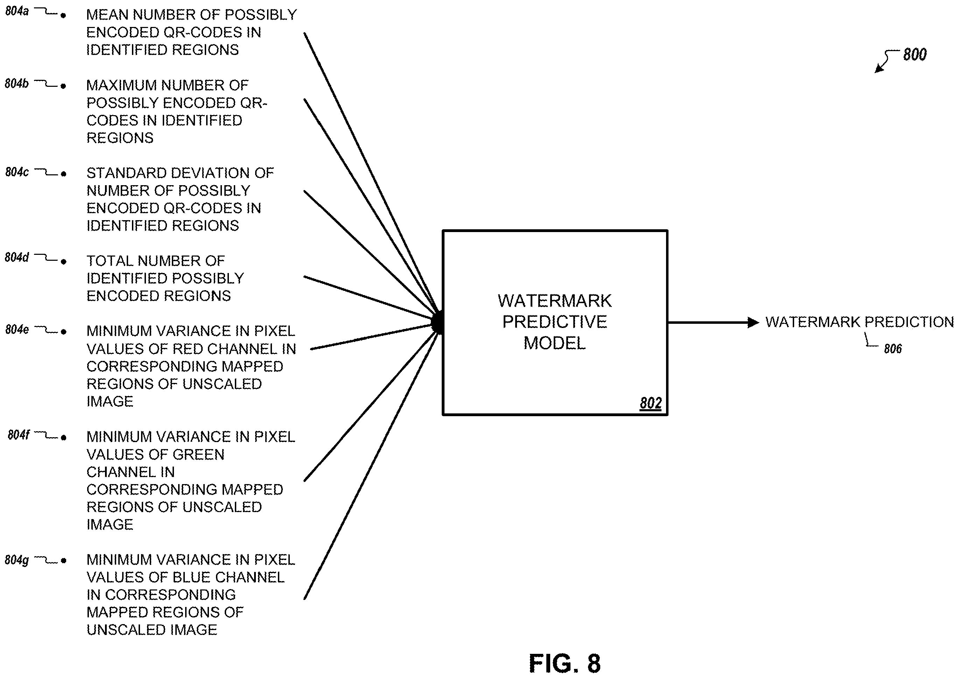

At stage 616, the system processes the values in the representative set(s) of predictive features with a predictive model, e.g., watermark predictive model 132, to generate a final prediction indicative of whether the possibly encoded source image likely has or has not been encoded with a watermarking image. In some implementations, the predictive model is configured to generate a binary output indicating that the possibly encoded source image either was likely encoded with a watermarking image or was likely not encoded with a watermarking image. In some implementations, the predictive model is configured to output a score (e.g., a probability value) indicating a numerical likelihood that the possibly encoded source image was encoded with a watermarking image or was not encoded with a watermarking image. In some implementations, the predictive model may generate the score as an intermediate output and then compare the score against a specified threshold to produce a final binary output indicating whether the possibly encoded source image likely was or was not encoded with a watermarking image. Any suitable form of predictive model may be employed for this task. In some implementations, the predictive model is a machine-learning model such as a neural network. For example, the neural network may be a feedforward neural network having an input layer configured to process the values from the representative set(s) of predictive features, one or more hidden layers that perform a series of operations on the inputs, and an output layer that generates the predictive output An illustration 800 of a watermark predictive model 802 processing values for seven features 804a-804g from a single representative set of values to generate a watermark prediction 806 is depicted in Figure 8.

In some implementations, the system can use the watermark prediction to inform decisions about whether to incur further processing expense in continuing to attempt to decode the possibly encoded source image. At stage 618, a system controller, e.g., controller 136, determines whether to continue decoding based on the output of the predictive model. If the prediction indicates that the possibly encoded source image likely was encoded with a watermarking image, then the system proceeds to stage 620 and uses another decoding model to attempt decoding of the possibly encoded source image. If successful, the encoded source image can be decoded to reconstruct the watermarking image, the encoding image (e.g., QR-code 500), or both. From the watermarking or encoding image, the plaintext data item and any information that it references can then be identified. If the prediction indicates that the possibly encoded source image likely was not encoded with a watermarking image, then the system foregoes further processing of the possibly encoded source image and does not continue to attempt decoding of the image (stage 622). In some implementations, when decoding does proceed at stage 620, the system may use information gleaned from earlier stages of the process 600 to target specific regions for decoding that are estimated to have the highest likelihood of success. The targeted regions may be the identified possibly encoded regions corresponding the scaled version of the image whose feature values were selected as the representative set, for example.

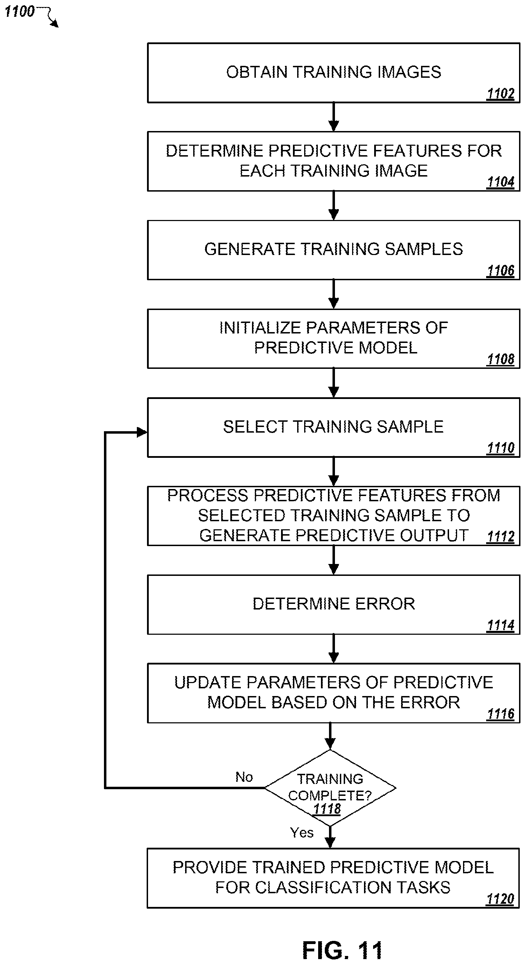

Figure 11 is a flowchart of an example process 1100 for training a predictive model, such as a neural network that implements the watermark predictive model 132 employed in the server system 102. In some implementations, the process 1100 is performed by the model training engine 134. At stage 1102, the system obtains a set of training images. Some images in the training set have been encoded with a watermarking image while others have not, but each image is labeled with a target (true) classification value indicating whether the image has or has not been watermarked. The system determines values for predictive features for each training image (stage 1104). The predictive features may include, for example, the seven features described with respect to Figures 6 and 8. The system then creates a set of training samples (stage 1106). Each training sample corresponds to a different one of the training images and contains a training input and a target training output. The training input includes or consists of values for the predictive features determined for the corresponding training image. The training output is a value representative of the target output of the predictive model given the training input. The target output can be a binary value that indicates whether or not the corresponding training image from which the values for the predictive features were derived was or was not encoded with a watermarking image. The system initializes internal parameters (e.g., using a randomized initialization process) of the neural network model (stage 1108). The system selects a first training sample (stage 1110) and then processes the training input from that training sample according to the current values of the model's internal parameters to generate a predictive output (stage 1 112). The system determines any error between the predictive output and the target output of the training sample (stage 1114), and then uses the error to update the internal parameters of the model so as to reduce the error (stage 1116). In some implementations, the error can be back-propagated and the model updated using gradient descent At stage 1118, the system checks whether additional training samples remain to be processed or if training has completed. If the training phase is not yet complete and additional samples remain, the process 1100 returns to stage 1110 where a next training sample is selected and operations 1112-118 are repeated. Once training is complete, the predictive model can be provided for use, e.g., as watermark model 132 or 802 in practice (stage 1120).

Implementations of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Implementations of the subject matter described in this specification can be implemented as one or more computer programs, i.e., one or more modules of computer program instructions encoded on a tangible non-transitory program carrier for execution by, or to control the operation of, data processing apparatus. Alternatively or in addition, the program instructions can be encoded on an artificially-generated propagated signal, e.g., a machine-generated electrical, optical, or electromagnetic signal, which is generated to encode information for transmission to suitable receiver apparatus for execution by a data processing apparatus. The computer storage medium can be a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example a programmable processor, a computer, or multiple processors or computers. The apparatus can also be or further include special purpose logic circuitry, e.g., an FPGA (field programmable gate array) or an ASIC (application-specific integrated circuit). The apparatus can Optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a communication network.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Computers suitable for the execution of a computer program include, by way of example, general or special purpose microprocessors or both, or any other kind of central processing unit. Generally, a central processing unit will receive instructions and data from a read-only memory or a random access memory or both. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks, magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user, for example, by sending web pages to a web browser on a user's device in response to requests received from the web browser.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some implementations, a server transmits data, e.g., an HTML page, to a user device, e.g., for purposes of displaying data to and receiving user input from a user interacting with the user device, which acts as a client. Data generated at the user device, e.g., a result of the user interaction, can be received from the user device at the server.

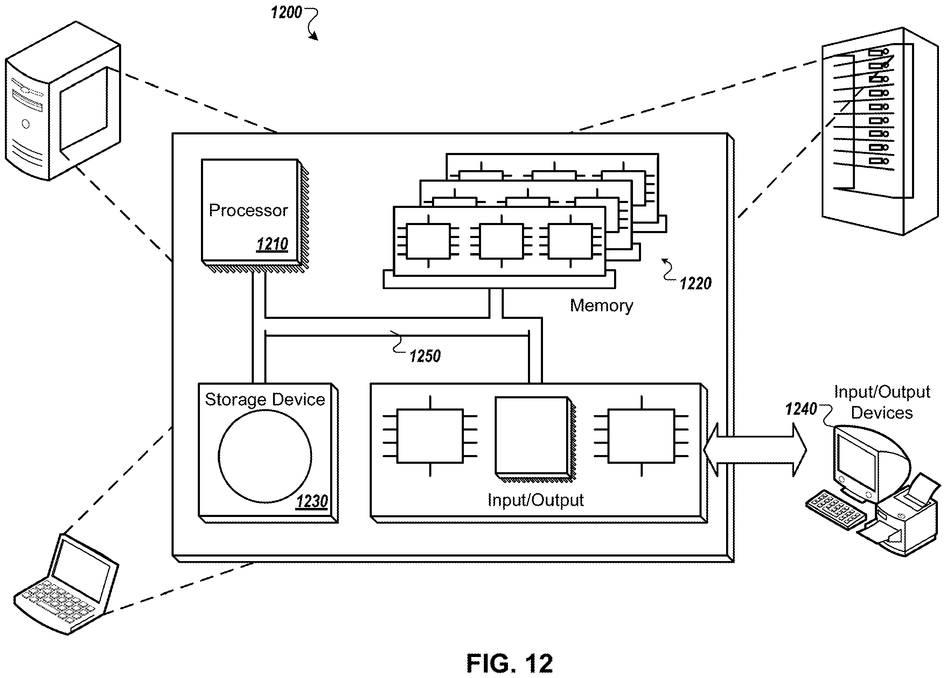

An example of one such type of computer is shown in Figure 12, which shows a schematic diagram of a generic computer system 1200. The system can be used for the operations described in association with any of the computer-implemented methods described previously, according to one implementation. The system 1200 includes a processor 1210, a memory 1220, a storage device 1230, and an input/output device 1240. Each of the components 1210, 1220, 1230, and 1240 are interconnected using a system bus 1250. The processor 1210 is capable of processing instructions for execution within the system 1200. In one implementation, the processor 1210 is a single-threaded processor. In another implementation, the processor 1210 is a multi-threaded processor. The processor 1210 is capable of processing instructions stored in the memory 1220 or on the storage device 1230 to display graphical information for a user interface on the input/output device 1240.

The memory 1220 stores information within the system 1200. In one implementation, the memory 1220 is a computer-readable medium. In one implementation, the memory 1220 is a volatile memory unit. In another implementation, the memory 1220 is a non-volatile memory unit.

The storage device 1230 is capable of providing mass storage for the system 1200. In one implementation, the storage device 1230 is a computer-readable medium. In various different implementations, the storage device 1230 may be a floppy disk device, a hard disk device, an optical disk device, or a tape device.

The input/output device 1240 provides input/output operations for the system 1200. In one implementation, the input/output device 1240 includes a keyboard and/or pointing device. In another implementation, the input/output device 1240 includes a display unit for displaying graphical user interfaces.

While this specification contains many specific implementation details, these should not be construed as limitations on the scope of the invention that is only defined by the appended claims.

Particular implementations of the subject matter have been described. Other implementations are within the scope of the following claims. In some cases, multitasking and parallel processing may be advantageous.

## Claims

1. A computer-implemented method, comprising:
obtaining (602) a first image;
analyzing attributes of pixels in the first image to determine encoded values of candidate encoded pixels in the first image, wherein the analyzing attributes of pixels in the first image to determine the encoded values of the candidate encoded pixels in the first image comprises, for each of all or some of the candidate encoded pixels in the first image, comparing a color of the candidate encoded pixel to the respective colors of one or more other pixels in the first image wherein the comparing comprises:
comparing the color of the candidate encoded pixel to neighboring pixels of the candidate encoded pixel;
if the color of the candidate encoded pixel is darker than its neighboring pixels by a predefined amount, then the candidate encoded pixel is identified as encoding a black pixel from the first image; and
if the color of the candidate encoded pixel is not darker than its neighboring pixels by the predefined amount, then the candidate encoded pixel is identified as encoding a white pixel from the first image;
analyzing patterns of encoded values of the candidate encoded pixels in the first image to determine candidate encoded regions of the first image, wherein analyzing the patterns of encoded values of the candidate encoded pixels in the first image to determine the candidate encoded regions of the first image comprises identifying regions that contain one or more blocks of candidate encoded pixels whose encoded values are determined to include one or more distinctive patterns indicative of a watermarking image, wherein identifying regions of the first image that contain one or more blocks of candidate encoded pixels whose encoded values are determined to include one or more distinctive patterns indicative of a watermarking image comprises locating instances of a pre-defined bit pattern that occur in each block, wherein when a set of predicted encoded values match the pre-defined pattern for a watermarking image, an instance of a watermarking is registered as a block of candidate encoded pixels for a candidate encoded region at the location where the pre-defined bit pattern is located;
determining (614) values for features of the candidate encoded regions of the first image, wherein the features characterize information about the candidate encoded regions identified in the first image, wherein determining the values for the features of the candidate encoded regions of the first image comprises:
for each candidate encoded region, counting a number of blocks of candidate encoded pixels in the candidate encoded region whose encoded values are determined to correspond to a different encoded instance of the watermarking image;
wherein the features of the candidate encoded regions of the first image are selected from a group comprising a mean number of counted blocks among the candidate encoded regions, a maximum number of counted blocks among the candidate encoded regions, a number of candidate encoded regions identified, and a standard deviation in the number of counted blocks among the candidate encoded regions;
processing (616), with a predictive model, the values for the features of the candidate encoded regions of the first image to generate a prediction indicative of whether a watermarking image is encoded in the first image; and
outputting the prediction.

2. The method of claim 1, wherein generating the prediction comprises selecting a binary value that indicates either that the watermarking image is encoded in the first image or the watermarking image is not encoded in the first image.

3. The method of claims 1 or 2, wherein generating the prediction comprises generating a numerical prediction that quantifies a likelihood that the watermarking image is or is not encoded in the first image.

4. The method of any one of claims 1 to 3, wherein outputting the prediction comprises at least one of storing the prediction in a memory of a computing system or providing the prediction for presentation to a user.

5. The method of any preceding claim, wherein outputting the prediction comprises providing the prediction to a controller that is configured to determine, based at least on the prediction, whether to apply a decoding process to the first image or a second image from which the first image was derived to recover the watermarking image.

6. The method of claim 5, wherein:
the controller is configured to apply the decoding process (620) to the first image or the second image to recover the watermarking image in response to identifying that the prediction indicates the watermarking image is encoded in the first image; and
the controller is configured not to apply the decoding process (622) to the first image or the second image to recover the watermarking image in response to identifying that the prediction indicates the watermarking image is not encoded in the first image.

7. The method of any preceding claim, wherein obtaining (602) the first image comprises obtaining a screenshot image from a user's computing device, the screenshot image showing served content in a webpage or a graphical user interface of a native application.

8. The method of any preceding claim, wherein the first image is a scaled version of a second image, and the method further comprises:
mapping the candidate encoded regions of the first image to corresponding regions of the second image;
determining variances in each of one or more color channels among the pixels in each mapped region of the second image;
for each color channel, determining the minimum variance for the color channel among the mapped regions of the second image; and
generating the prediction indicative of whether a watermarking image is encoded in the first image comprises further processing the minimum variances for each of the one or more color channels among the pixels in each mapped region of the second image.

9. The method of any preceding claim, wherein the predictive model comprises one or more of a binary classification model and a neural network.

10. A system, comprising:
one or more processors; and
one or more computer-readable media having instructions stored thereon that, when executed by the one or more processors, cause the one or more processors to perform the method of any preceding claim.

11. One or more non-transitory computer-readable media having instructions stored thereon that, when executed by one or more processors, cause the one or more processors to perform the method of any of claims 1-9.

## Patentansprüche

1. Computerimplementiertes Verfahren, umfassend:
Erlangen (602) eines ersten Bildes;
Analysieren von Attributen von Pixeln in dem ersten Bild, um codierte Werte von Kandidaten-codierten Pixeln in dem ersten Bild zu bestimmen, wobei das Analysieren von Attributen von Pixeln in dem ersten Bild, um die codierten Werte der Kandidaten-codierten Pixel in dem ersten Bild zu bestimmen, Vergleichen einer Farbe des Kandidaten-codierten Pixels mit den jeweiligen Farben von einem oder mehreren anderen Pixeln in dem ersten Bild umfasst, für jedes von allen oder einigen der Kandidaten-codierten Pixel in dem ersten Bild, wobei das Vergleichen Folgendes umfasst:
Vergleich der Farbe des Kandidaten-codierten Pixels mit benachbarten Pixeln des Kandidaten-codierten Pixels;
wenn die Farbe des Kandidaten-codierten Pixels um einen vordefinierten Betrag dunkler ist als dessen benachbarte Pixel, dann wird das Kandidaten-codierte Pixel als ein schwarzes Pixel des ersten Bildes identifiziert; und
wenn die Farbe des Kandidaten-codierten Pixels nicht um den vordefinierten Betrag dunkler ist als dessen benachbarte Pixel, dann wird das Kandidaten-codierte Pixel als ein weißes Pixel des ersten Bildes identifiziert;
Analysieren von Mustern codierter Werte der Kandidaten-codierten Pixel in dem ersten Bild, um Kandidaten-codierte Bereiche des ersten Bildes zu bestimmen, wobei das Analysieren der Muster codierter Werte der Kandidaten-codierten Pixel in dem ersten Bild, um die Kandidaten-codierten Bereiche des ersten Bildes zu bestimmen, das Identifizieren von Bereichen umfasst, die einen oder mehrere Blöcke von Kandidaten-codierten Pixeln enthalten, deren codierte Werte bestimmt sind, um ein oder mehrere unterscheidende Muster, die ein Wasserzeichenbild angeben, zu beinhalten, wobei das Identifizieren von Bereichen des ersten Bildes, die einen oder mehrere Blöcke von Kandidaten-codierten Pixeln enthalten, deren codierte Werte bestimmt sind, um ein oder mehrere unterscheidende Muster, die ein Wasserzeichenbild angeben, zu beinhalten, Orten von Instanzen eines vordefinierten Bitmusters, das in jedem Block auftritt, umfasst, wobei, wenn ein Satz vorhergesagter codierter Werte mit dem vordefinierten Muster für ein Wasserzeichenbild übereinstimmt, eine Instanz eines Wasserzeichens als ein Block von Kandidaten-codierten Pixeln für einen Kandidaten-codierten Bereich an dem Standort registriert wird, an dem sich das vordefinierte Bitmuster befindet;
Bestimmen (614) von Werten für Merkmale der Kandidaten-codierten Bereiche des ersten Bildes, wobei die Merkmale Informationen über die Kandidaten-codierten Bereiche, die in dem ersten Bild identifiziert wurden, kennzeichnen, und wobei das Bestimmen der Werte für die Merkmale der Kandidaten-codierten Bereiche des ersten Bildes Folgendes umfasst:
für jeden Kandidaten-codierten Bereich, Zählen einer Anzahl von Blöcken von Kandidaten-codierten Pixeln in dem Kandidaten-codierten Bereich, deren codierte Werte bestimmt sind, einer unterschiedlichen codierten Instanz des Wasserzeichenbildes zu entsprechen;
wobei die Merkmale der Kandidaten-codierten Bereiche des ersten Bildes aus einer Gruppe ausgewählt sind, die eine durchschnittliche Anzahl von gezählten Blöcken unter den Kandidaten-codierten Bereichen, eine maximale Anzahl von gezählten Blöcken unter den Kandidaten-codierten Bereichen, eine Anzahl von identifizierten Kandidaten-codierten Bereichen und eine Standardabweichung bei der Anzahl von gezählten Blöcken unter den Kandidaten-codierten Bereichen umfasst;
Verarbeiten (616) der Werte für die Merkmale der Kandidaten-codierten Bereiche des ersten Bildes mit einem Vorhersagemodell, um eine Vorhersage zu erzeugen, die angibt, ob ein Wasserzeichenbild in dem ersten Bild codiert ist; und Ausgeben der Vorhersage.

2. Verfahren nach Anspruch 1, wobei das Erzeugen der Vorhersage Auswählen eines Binärwertes umfasst, der entweder angibt, dass das Wasserzeichenbild in dem ersten Bild codiert ist oder dass das Wasserzeichenbild nicht in dem ersten Bild codiert ist.

3. Verfahren nach Anspruch 1 oder 2, wobei das Erzeugen der Vorhersage Erzeugen einer numerischen Vorhersage umfasst, die eine Wahrscheinlichkeit quantifiziert, dass das Wasserzeichenbild in dem ersten Bild codiert ist oder nicht.

4. Verfahren nach einem der Ansprüche 1 bis 3, wobei das Ausgeben der Vorhersage mindestens eines von Speichern der Vorhersage in einem Speicher eines Rechensystems oder Bereitstellen der Vorhersage zur Präsentation an einen Benutzer umfasst.

5. Verfahren nach einem der vorhergehenden Ansprüche, wobei das Ausgeben der Vorhersage das Bereitstellen der Vorhersage an eine Steuerung umfasst, die konfiguriert ist, um zu bestimmen, ob ein Decodierungsprozess auf das erste Bild oder ein zweites Bild, von dem das erste Bild abgeleitet wurde, angewendet werden soll, um das Wasserzeichenbild wiederherzustellen, zumindest basierend auf der Vorhersage.

6. Verfahren nach Anspruch 5, wobei:
die Steuerung dazu konfiguriert ist, den Decodierungsprozess (620) auf das erste Bild oder das zweite Bild anzuwenden, um das Wasserzeichenbild als Reaktion auf das Identifizieren, dass die Vorhersage angibt, dass das Wasserzeichenbild in dem ersten Bild codiert ist, wiederherzustellen; und
die Steuerung nicht dazu konfiguriert ist, den Decodierungsprozess (622) auf das erste Bild oder das zweite Bild anzuwenden, um das Wasserzeichenbild als Reaktion auf das Identifizieren, dass die Vorhersage angibt, dass das Wasserzeichenbild nicht in dem ersten Bild codiert ist, wiederherzustellen.

7. Verfahren nach einem der vorhergehenden Ansprüche, wobei das Erlangen (602) des ersten Bildes das Erlangen eines Screenshot-Bildes von einer Rechenvorrichtung eines Benutzers umfasst, wobei das Screenshot-Bild gelieferten Inhalt auf einer Webseite oder einer grafischen Benutzerschnittstelle einer nativen Anwendung zeigt.

8. Verfahren nach einem vorhergehenden Anspruch, wobei das erste Bild eine skalierte Version eines zweiten Bildes ist, und das Verfahren ferner Folgendes umfasst:
Abbilden der Kandidaten-codierten Bereiche des ersten Bildes auf entsprechende Bereiche des zweiten Bildes;
Bestimmen von Abweichungen in jedem von einem oder mehreren Farbkanälen unter den Pixeln in jedem abgebildeten Bereich des zweiten Bildes;
für jeden Farbkanal Bestimmen der Mindestabweichung für den Farbkanal unter den abgebildeten Bereichen des zweiten Bildes; und
wobei das Erzeugen der Vorhersage, die angibt, ob ein Wasserzeichenbild in dem ersten Bild codiert ist, ferner das Verarbeiten der Mindestabweichungen für jeden der einen oder der mehreren Farbkanäle unter den Pixeln in jedem abgebildeten Bereich des zweiten Bildes umfasst.

9. Verfahren nach einem vorhergehenden Anspruch, wobei das Vorhersagemodell ein oder mehrere binäre Klassifikationsmodelle und ein neuronales Netz umfasst.

10. System, umfassend:
einen oder mehrere Prozessoren; und
ein oder mehrere computerlesbare Medien, die darauf gespeicherte Anweisungen aufweisen, die, wenn sie von dem einen oder den mehreren Prozessoren ausgeführt werden, den einen oder die mehreren Prozessoren veranlassen, das Verfahren nach einem vorhergehenden Anspruch durchzuführen.

11. Ein oder mehrere nichttransitorische computerlesbare Medien, die darauf gespeicherte Anweisungen aufweisen, die, wenn sie von einem oder mehreren Prozessoren ausgeführt werden, den einen oder die mehreren Prozessoren veranlassen, das Verfahren nach einem der Ansprüche 1-9 durchzuführen.

## Revendications

1. Procédé mis en œuvre par ordinateur, comprenant :
l'obtention (602) d'une première image ;
l'analyse d'attributs de pixels dans la première image pour déterminer des valeurs codées des pixels codés candidats dans la première image, dans lequel l'analyse d'attributs de pixels dans la première image pour déterminer les valeurs codées des pixels codés candidats dans la première image comprend, pour chacun de tout ou partie des pixels codés candidats dans la première image, la comparaison d'une couleur du pixel codé candidat aux couleurs respectives d'un ou de plusieurs autres pixels dans la première image dans lequel la comparaison comprend :
la comparaison de la couleur du pixel codé candidat aux pixels voisins du pixel codé candidat ;
si la couleur du pixel codé candidat est plus foncée que ses pixels voisins d'une quantité prédéfinie, alors le pixel codé candidat est identifié comme codant un pixel noir de la première image ; et
si la couleur du pixel codé candidat n'est pas plus foncée que ses pixels voisins de la quantité prédéfinie, alors le pixel codé candidat est identifié comme codant un pixel blanc de la première image ;
l'analyse de motifs de valeurs codées des pixels codés candidats dans la première image pour déterminer des zones codées candidates de la première image, dans lequel l'analyse des motifs de valeurs codées des pixels codés candidats dans la première image pour déterminer les zones codées candidates de la première image comprend l'identification de zones qui contiennent un ou plusieurs blocs de pixels codés candidats dont les valeurs codées sont déterminées comme comportant un ou plusieurs motifs distinctifs indiquant une image de filigrane, dans lequel l'identification de zones de la première image qui contiennent un ou plusieurs blocs de pixels codés candidats dont les valeurs codées sont déterminées comme comportant un ou plusieurs motifs distinctifs indiquant une image de filigrane comprend la localisation d'instances d'un motif binaire prédéfini qui se produisent dans chaque bloc, dans lequel lorsqu'un ensemble de valeurs codées prédites correspond au motif prédéfini pour une image de filigrane, une instance d'un filigrane est enregistrée en tant que bloc de pixels codés candidats pour une zone codée candidate à l'emplacement où se trouve le motif binaire prédéfini ;
la détermination (614) de valeurs pour des caractéristiques des zones codées candidates de la première image, dans lequel les caractéristiques caractérisent des informations sur les zones codées candidates identifiées dans la première image, dans lequel la détermination des valeurs pour les caractéristiques des zones codées candidates de la première image comprend :
pour chaque zone codée candidate, le compte d'un nombre de blocs de pixels codés candidats dans la zone codée candidate dont les valeurs codées sont déterminées comme correspondant à une instance codée différente de l'image de filigrane ;
dans lequel les caractéristiques des zones codées candidates de la première image sont sélectionnées dans un groupe comprenant un nombre moyen de blocs comptés parmi les zones codées candidates, un nombre maximal de blocs comptés parmi les zones codées candidates, un nombre de zones codées candidates identifiées, et un écart type dans le nombre de blocs comptés parmi les zones codées candidates ;
le traitement (616), avec un modèle prédictif, des valeurs des caractéristiques des zones codées candidates de la première image pour générer une prédiction indiquant si une image de filigrane est codée dans la première image ; et
le fait de délivrer la prédiction.

2. Procédé selon la revendication 1, dans lequel la génération de la prédiction comprend la sélection d'une valeur binaire qui indique soit que l'image de filigrane est codée dans la première image, soit que l'image de filigrane n'est pas codée dans la première image.

3. Procédé selon les revendications 1 ou 2, dans lequel la génération de la prédiction comprend la génération d'une prédiction numérique qui quantifie une probabilité selon laquelle l'image de filigrane est ou non codée dans la première image.

4. Procédé selon l'une quelconque des revendications 1 à 3, dans lequel le fait de délivrer la prédiction comprend au moins l'une des étapes suivantes : le stockage de la prédiction dans une mémoire d'un système informatique ou la fourniture de la prédiction pour présentation à un utilisateur.

5. Procédé selon une quelconque revendication précédente, dans lequel le fait de délivrer la prédiction comprend la fourniture de la prédiction à un dispositif de commande qui est configuré pour déterminer, sur la base au moins de la prédiction, s'il faut appliquer un processus de décodage à la première image ou à une seconde image à partir de laquelle la première image a été dérivée pour récupérer l'image de filigrane.

6. Procédé selon la revendication 5, dans lequel :
le dispositif de commande est configuré pour appliquer le processus de décodage (620) à la première image ou à la seconde image pour récupérer l'image de filigrane en réponse à l'identification du fait que la prédiction indique que l'image de filigrane est codée dans la première image ; et
le dispositif de commande est configuré pour ne pas appliquer le processus de décodage (622) à la première image ou à la seconde image pour récupérer l'image de filigrane en réponse à l'identification du fait que la prédiction indique que l'image de filigrane n'est pas codée dans la première image.

7. Procédé selon une quelconque revendication précédente, dans lequel l'obtention (602) de la première image comprend l'obtention d'une image de capture d'écran à partir du dispositif informatique d'un utilisateur, l'image de capture d'écran montrant un contenu diffusé dans une page Web ou une interface utilisateur graphique d'une application native.

8. Procédé selon une quelconque revendication précédente, dans lequel la première image est une version mise à l'échelle d'une seconde image, et le procédé comprend également :
le mappage des zones codées candidates de la première image aux zones correspondantes de la seconde image ;
la détermination de variances dans chacun d'un ou de plusieurs canaux de couleur parmi les pixels dans chaque zone mappée de la seconde image ;
pour chaque canal de couleur, la détermination de la variance minimale pour le canal de couleur parmi les zones mappées de la seconde image ; et
la génération de la prédiction indiquant si une image de filigrane est codée dans la première image comprend le traitement ultérieur des variances minimales pour chacun des un ou plusieurs canaux de couleur parmi les pixels dans chaque zone mappée de la seconde image.

9. Procédé selon une quelconque revendication précédente, dans lequel le modèle prédictif comprend un ou plusieurs éléments parmi un modèle de classification binaire et un réseau neuronal.

10. Système, comprenant :
un ou plusieurs processeurs ; et
un ou plusieurs supports lisibles par ordinateur sur lesquels sont stockées des instructions qui, lorsqu'elles sont exécutées par les un ou plusieurs processeurs, amènent les un ou plusieurs processeurs à réaliser le procédé selon une quelconque revendication précédente.

11. Un ou plusieurs supports non transitoires lisibles par ordinateur sur lesquels sont stockées des instructions qui, lorsqu'elles sont exécutées par un ou plusieurs processeurs, amènent les un ou plusieurs processeurs à réaliser le procédé selon l'une quelconque des revendications 1 à 9.
